# EUROPEAN PATENT SPECIFICATION

(11) **EP 3 073 177 B1**
(45) Date of publication and mention of the grant of the patent: **11.10.2017**
(21) Application number: 16166890.0
(22) Date of filing: 31.01.2013
(51) Int. Cl.: F21S 2/00, B25J 5/00, B25J 15/00, F21S 8/08, F21V 21/36, F21W 111/02, F21W 131/103

(54) **SYSTEM FOR REPLACING STREET LIGHT LUMINARIES**
SYSTEM ZUM AUSTAUSCHEN VON STRASSENLATERNEN
SYSTÈME DE REMPLACEMENT DE LUMINAIRES D'ÉCLAIRAGE DE RUE

(30) Priority: 01.02.2012 SE 1250071
(43) Date of publication of application: 28.09.2016
(62) Divisional of application: 13743233.2
(73) Proprietor: Strihl Scandinavia AB, 434 37 Kungsbacka (SE)
(72) Inventor: CARLÉN, Rikard, 439 94 Onsala (SE)
(74) Representative: Ström & Gulliksson AB

(56) References cited:
- WO-A1-2007/076581
- WO-A1-2012/167320
- JP-A- H0 567 401
- JP-A- S6 181 111
- JP-A- H01 231 800
- JP-A- H06 203 616
- JP-A- 2002 093 208
- US-A- 5 183 168

## Description

### TECHNICAL FIELD

The present invention relates to a system for replacing a modular street light luminaire arranged on a lighting column, wherein the modular street light luminaire comprises a light source and a housing, wherein the housing comprises a first coupling device, and where the lighting column has a second coupling device at one end to attach the street light luminaire through the first coupling device, wherein the system for replacing the modular street light luminaire comprises an arm mounted on a transport unit.

### TECHNICAL BACKGROUND

Replacing lamps in street light luminaires is traditionally done by a person being lifted up to the street light luminaire in a cherry picker or similar, which is problematic in several respects.

Most obvious are the risks that the person performing this operation is exposed to as the work is carried out at significant height. Working at heights is governed by the Work Environment Act. Another problem with having personnel raised up high near lighting columns exists if the lighting columns are located in the vicinity of overhead lines. There is a significant risk associated with that hanging wires are often not insulated and therefore dangerous to come into contact with.

In addition to the work being carried out at significant height, working with lighting columns means further problems as they are not completely fixed. The environmental stress that lighting columns are exposed to because of the weather, and the fact that they are very high and that the street light luminaires often carry considerable weight, makes them sway and unstable by nature. This means that the lighting column itself in many cases cannot provide support for the replacement of street light luminaires.

In addition, the operation of changing the lighting unit/lamp or the entire street light luminaire takes a relatively long period of time since the person performing the work must be lowered between each operation, while the cherry picker or similar device is moved between lighting columns. In most cases, the cherry picker or similar device must be driven on the road or in the area that the street light luminaires are intended to illuminate. This unit is often very slow and takes up a great deal of space on the road, which is problematic as the cherry picker or similar, and even the person doing the work who must move between the cherry picker and driver's position, is in danger of being hit by other vehicles. It is even more dangerous for the personnel if the standing cherry picker or similar is hit while in raised position. In addition, the presence of the cherry picker may adversely affect the traffic, which may increase the risk of other accidents.

To minimise the operational impact on the traffic, it is often advantageous to carry out the work in the evening and night time, which is not always preferable from the standpoint of the personnel doing the work.

All this means that the time necessary to change the lighting unit/lamp, or the entire street light luminaire, should be kept to an absolute minimum.

The publications that exist today largely deal with solutions which are all based on the principle of that in one way or another lowering the entire street light luminaire, or only the part of the street light luminaire where the lighting unit/lamp is mounted, to ground level. None of these techniques, however, has had significant impact, because these technologies often involve the use of relatively sophisticated mechanical solutions, and this may be a problem since the units for street lighting and associated street light luminaires must withstand very tough weather-related conditions, and last for a very long time. Even with solutions according to this principle, the time it takes to perform the replacement of lighting unit/lamp or the whole street light luminaire is still a problem.

In addition, the current state of the art shows that work is being done to address the problems mentioned above, including various solutions to easily access the lighting unit/lamp, thus being able to replace it rapidly and easily, and by creating modular lighting fittings so that they can be replaced as a unit, which also means that replacement can be performed rapidly and easily. Both of these methods are disclosed, for example, in JP10092212.

Both of these approaches are useful to reduce the time required for the replacement of the lighting unit/bulb or the entire street light luminaire, but there is still much that can be improved. In particular, none of these approaches solves the problem that work still must be done by a person working at height.

A further system for replacing street light luminaire is shown in JP2002093208.

### DESCRIPTION OF THE INVENTION

The object of the present invention is to provide a device for the replacement of modular street light luminaire, subsequently called the "device" or "device for the replacement of modular street light luminaire". A modular street light luminaire is arranged on a fighting column, wherein the modular street light luminaire comprises a light source and a housing. The housing comprises a first coupling device and the end of the lighting column has a second coupling device to attach the street light luminaire through the first coupling device. The device for the replacement of modular street light luminaires comprises an arm mounted on a transport unit. The device according to the invention moreover comprises at least one controllable robot, arranged on the arm and comprising at least a first grip device, wherein the grip device is arranged to remove and replace street light luminaires. The controllable robot is configured to be operated by remote control, from a distance or by using a pre-programmed process. The device according to the invention also comprises a battery rack for street light luminaires, wherein the battery rack is arranged on the arm or on the controllable robot. Street light luminaires are often arranged many metres above ground level, which is why this device enables the entire operation including the replacement of the street light luminaire can be performed from the ground without the need to lift any personnel. This has a number of advantages, such as eliminating the risks that the person who otherwise would have had to be hoisted up would have been exposed to.

In this context, a modular street light luminaire is referred to as a lighting unit comprising the housing and the light source. The light source, which may consist of one or more lighting units/lamp units, may for example be in the form of LED light bulb, light diode, HID lamp, metal halide light, ceramic metal halide light, high pressure sodium lamp, plasma lamp, induction lamps or lighting of any other type. The light source is preferably arranged in a socket mounted in the housing and may be connected directly or indirectly with the second coupling device on the lighting column through the first coupling device. The second coupling device may also comprise a socket which connects to the socket of the light source or with another corresponding part of the first coupling device. The first coupling device and the second coupling device serve at least two purposes, one being to connect and attach the modular street light luminaire to the lighting column and the second is to connect the electrical power to the light source. The sockets comprise connectors for power supply to the light source from an electricity grid by a cable taken through the lighting column.

The housing is designed to protect the light source from environmental elements, and configured to direct light from the source in desired direction. The housing may comprise a reflector and/or a prism and/or may be a completely or partially light-permeable material extending fully or partially around the housing and/or a non-light transmitting part with the primary purpose of protecting the light source. The housing may cover all or part of the street light luminaire. The street light luminaire may comprise additional components such as technology to harness the energy in wind, solar cells, batteries, power reducers or different arrangements and devices to protect and/or operate the street light luminaire. It may also comprise different types of sensors, preferably intended to switch on and/or off the street lights. Street light luminaires and associated lighting columns are exposed to extremely harsh conditions, all year round, and for a very long time.

In addition, the street light luminaire's actuator may be arranged both in the street light luminaire, which means that the actuator is disconnected at the same time as the device for replacing the modular street light luminaire disconnects the existing street light luminaire, and that a new actuator is installed at the same time as a new street light luminaire is mounted, or may be arranged in the second coupling device provided on the lighting column, so that the actuator is not disconnected at the same time as the device for replacing the modular street light luminaire disconnects the existing street light luminaire, but the new street light luminaire is mounted using the same actuator. The first of the two configurations provides the advantage that in this configuration also the actuator can be replaced in a simple and easy way.

In this context, actuator means a device comprising electric systems primarily to switch on and off the lamp, but it may also comprise electrical systems for controlling the brightness. An actuator typically comprises coil, ignition, capacitor and other devices contained in electrical circuits.

As mentioned above, the second coupling device is arranged to the lighting column, and it is connected to the first coupling device which is comprised in the street light luminaire. When the street light luminaire is replaced it is this connection that is disconnected, and when a new street light luminaire is arranged this is done by connecting the new street light luminaire's first coupling device with the lighting column's second coupling device, wherein the socket of the first coupling device may be connected to the socket of the second coupling device, which provides the light source with electrical power from an electricity grid.

The controllable robot is arranged on the arm. The controllable robot comprises at least one grip device arranged on the robot arm, wherein the controllable robot may be arranged on the arm so that it is articulated and controllable in at least one direction. The robot arm may be arranged to the controllable robot so that it is articulated vertically and/or laterally and/or in and out and/or can rotate or be tilted. In addition, also the grip device may be arranged to the robot arm so that it is articulated vertically and/or laterally and/or in and out and/or can rotate or be tilted. This means that the controllable robot, the robot arm and the grip device can be positioned according to the position of the lighting column and the street light luminaire on which the controllable robot will operate.

Replacing a street light luminaire can be done either by the street light luminaire being replaced with a new street light luminaire from the same street light luminaire system or that said street light luminaire is being replaced as a new street light luminaire system is introduced. In the latter case the lighting column is cut in such a way that the street light luminaire can be removed. Then, a new second coupling device is arranged to the lighting column for future interconnection with the new street light luminaire using the first coupling device. This may be done either by arranging a second coupling device to the cut lighting column, or by arranging a street light luminaire with a first coupling device connected to a second coupling device to the cut lighting column.

Existing street light luminaires may in certain configurations also be removed using other methods than by cutting, such as by unscrewing the street light luminaire from the lighting column, pulling it away from the lighting column or other methods of removal compatible with the existing street light luminaire system. The available methods for cutting or removing a component from a preferably tubular installation such as a lighting column are considered to be part of general knowledge. Other street light luminaire systems than those described above, comprising the modular street light luminaire, may be arranged on the cut street lighting column. In these cases, another type of street light luminaire is used.

Arranging a new second coupling device to the cut column, or to a column that has had the existing street light luminaire removed in another way, may be done by screwing on the second coupling device or another type of street light luminaire, by pushing it over the end of the column or by another method or technology that allows a second coupling device or other type of street light luminaire to be arranged to the end of the lighting column.

According to a first example, the replacement of street light luminaire is done by moving the transport unit to a suitable position at the lighting column by a driver. The controllable robot may be loaded with a new modular street light luminaire that will replace the old one during transport, or the controllable robot may be loaded with a new modular street light luminaire before the arm is moved into position at the lighting column. Street light luminaires may be provided with means of guiding and positioning the grip device to the street light luminaire, so that the latter can easily be grasped by the grip device.

The driver or another appointed person can then move the loaded robot arm to the proper height and proper position by remote control. Then the controllable robot is moved so that the grip device/devices are in position to demount the old modular street light luminaire and arrange the new modular street light luminaire. Also during this operation may the means to direct and position the grip device to the street light luminaire assist in moving the grip device accurately in relation to the street light luminaire to be removed. In this example the controllable robot comprises at least two grip devices, wherein one grip device holds the new modular street light luminaire and the second grip device holds the old modular street light luminaire.

The controllable robot may also comprise means of fixating the grip device to the lighting column. The means of fixating the grip device to the lighting column may be arranged to the transport unit, the arm, the controllable robot, the robot arm or the grip device, as long as this allows the grip device itself to be fixated relative the lighting column with the associated street light luminaire to be replaced. The grip device, or any device arranged to the grip device, cannot perform the operations it is designed to execute without being fixated relative the lighting column. Lighting columns are often very high and suffer from major external impact, such as wind, possibly making them likely to sway. This may mean that they are not in themselves sufficiently rigid to support the operations outlined above. In these cases, means of fixating the grip device to the lighting column is essential.

The controllable robot may also comprise a device adapted to remove existing street light luminaire. This device may be arranged to the grip device, the robot arm, the controllable robot, an arm or the transport unit and entails that the existing street light luminaire can be removed by cutting the lighting column.

The controllable robot may also comprise additional grip devices to perform additional operations in connection with the maintenance of the lighting column and the modular street light luminaire, for example a device for feeding in cable and/or a device for mounting the second coupling device. These devices may be arranged to the same or different grip devices, to the same or different robot arms, to the controllable robot, to the arm or to the transport unit. These devices entails that a new street light luminaire system can be arranged as the existing street light luminaire is removed.

According to another example, several arms are arranged to the transport unit with controllable robots comprising one or more grip devices. The multiple arms are moved into position so that the respective controllable robot is able to operate as intended. In this configuration, the arms may be arranged with controllable robots which have different devices for different tasks so that certain operations can be performed more efficiently.

According to yet another example, the process of replacing the modular street light luminaires can be done at least partially sequentially, wherein one or more arms, and the associated controllable robot or controllable robots and grip device or grip devices, may first be moved to perform an operation at the height where the modular street light luminaire is positioned and then may be moved back down to the transport unit for an operation at a lower level, for example, loading or unloading from one or more grip devices from/to the transport unit.

All of these configurations of the present invention results in that the operation of replacing an existing street light luminaire with a new street light luminaire can be done in much shorter time and also increases safety for both the personnel and the machines used to perform the operation, and for other road users.

The device comprises a battery rack of street light luminaires, in which both street light luminaires for replacement can be carried and replaced street light luminaires can be deposited. This means that depending on the task the device shall perform, or has performed, this battery rack is filled to a greater or lesser extent with street light luminaires for installation or removed street light luminaires. The battery rack is arranged on the arm or the controllable robot.

The battery rack may be of many different configurations, but is preferably configured so that at least one of the arms can pick up and/or deposit street light luminaires from/to the battery rack.

By using the battery rack, which can carry several street light luminaires and hold the replaced street light luminaires, more street light luminaires can be replaced in a shorter time. This result in that the total time the device for replacing modular street light luminaires needs to stay out in the traffic can be minimised.

According to one example, the device comprises an arm and/or a robot arm which are both articulated and movable laterally and/or vertically and/or in and out and/or articulated by a ball joint, and wherein the arm and/or the robot arm can move in multiple directions and can rotate. The arm may be controlled from the transport unit, by remote control or by a pre-programmed process. Consequently, the controllable arm and/or robot arm are articulated and controllable in at least one direction.

The controllable robot may further be equipped with a lighting device, wherein the lighting device is arranged in such a way that 0-360° of the range of 0-10 m around the controllable robot is illuminated. The lighting device may also be controlled and directed remotely.

In configurations in which the device comprises more than one arm and/or controllable robot, these may also be equipped with additional lighting devices.

Also the battery rack may be equipped with a lighting device, wherein the lighting is arranged in such a way that the battery rack is illuminated, so that the street light luminaires taken from or deposited in the battery rack are illuminated.

In configurations in which the device comprises more than one battery rack these may also be equipped with lighting devices.

The device may also be equipped with a camera surveillance system. The camera surveillance system is arranged in such a way that the controllable robot, including the robot arm and the grip device, as well as the operations performed by the components outlined above, are monitored. The camera surveillance system may preferably be controlled by remote control so that the desired area can be monitored. This is possible because the camera surveillance system can rotate and move vertically and/or horizontally and/or in and out and/or rotate and tilt.

In configurations in which the device comprises more than one arm and/or controllable robot and/or robot arm and/or grip device, these may also be monitored with one or more camera surveillance systems.

By using the camera surveillance system the arm, controllable robot, robot arm and grip device may be operated by remote control from the transport unit and/or from a distance. By using the camera surveillance system in conjunction with the lighting device the arm, controllable robot, robot arm and grip device may be operated by remote control from the transport unit and/or from a distance even if it is dark. This means that the replacement of street light luminaires may be performed in a way that is safer for the personnel carrying out the work.

In one configuration of the present invention the controllable robot further comprises a grip device adapted to grasp, hold and release the street light luminaires as necessary.

This means that the grip device in position at the battery rack may take hold of the street light luminaire. The grip device is configured to hold the street light luminaire while the arm moves the controllable robot from a position at the battery rack to a position by the lighting column. The controllable robot then replaces the street light luminaire. If the lighting column does not have a street light luminaire the controllable robot can install a new modular street light luminaire either by connecting the first coupling device to the second coupling device, or by replacing the existing coupling device on the lighting column with a second coupling device. When the street light luminaire is in place, the grip device is configured to let go of the street light luminaire.

The grip device's means for grasping the street light luminaire may be in the form of two or more gripping surfaces which move in a manner that allows the street light luminaire to be held by the grip device. One or more of the gripping surfaces may have a resilient coating or a coating increasing the grip surface friction of the grip device against the surface of the street light luminaire. In addition, the means of the grip device to grasp the street light luminaire may be in the form of at least one projection on the grip device which has at least one matching recess on the street light luminaire, which the grip device may use to hold to the street light luminaire. The means of the grip device to grasp the street light luminaire may also be in the form of at least one recess on the grip device which has at least one matching projection on the street light luminaire, which the grip device may use to hold to the street light luminaire. In addition, the means of the grip device to grasp the street light luminaire may be in the form of interactive magnets or in the form of one or more hooks on the grip device which hook to the relevant places on the street light luminaire. The means of the grip device to grasp the street light luminaire may also be in the form of one or more suction cups with/without the ability to create a suction force using a vacuum to grasp the street light luminaire. There are a variety of different methods or techniques for designing the grip device making it possible to grasp the street light luminaire. The way the grip device grasps the street light luminaire could also be in the form of at least one screw device or other form of coupling that engages an interacting part of the street light luminaire, or in the form of lifting system. The street light luminaire could comprise a way of interacting with the grip device or the grip device may be completely adapted to fit the street light luminaire.

In the configurations where the controllable robot has more than one grip device, the grip devices are arranged so that the grip devices may be switched either by a movement of the controllable robot or by movement of one of the grip devices.

As above, the grip device may comprise means of guiding and positioning the grip device correctly in relation to the street light luminaire. The means may be in the form of grooves, guide rails, ribs, magnets, indentations, recesses, protrusions or the like. In this way the operation is facilitated as an empty grip device, not holding any street light luminaires, can pass in to grasp a street light luminaire either from the battery rack or from a lighting column.

In addition, the grip device may comprise means of guiding and positioning the grip device correctly in relation to the lighting column, wherein the assembly and/or disassembly of the street light luminaire can be executed. The means of guiding the grip device to the correct position relative to the lighting column may be in the form of tracks, guide rails, flanges, magnets, cavities, recesses, protrusions, devices for passive or active control with ultrasound, devices for passive or active control with infrared light, devices for passive or active control with laser or the like. The means of guiding the grip device to the right position in relation to the lighting column may also be arranged to the transport unit and/or the controllable robot and/or the arm.

The grip device or the controllable robot may further, as described above, comprise means of fixating or rigidly position the grip device to the lighting column while the operation carried out by the grip device is executed, wherein the lighting column is subjected to minimal influence of lateral and/or in and out and/or vertical and/or rotating forces. The means of fixating the grip devices to the lighting columns do not need to be arranged to the grip device, but may also be arranged to the transport unit and/or the controllable robot and/or the arm and/or the robot arm. Fixating the lighting column while the operation is performed is important for the operation to be carried out in a reliable way. The means of fixating the grip device, the controllable robot etc. to the lighting column may also be in the form of a gripping device comprising at least one gripping claw or similar. In addition, the means to fixate the grip device, controllable robot etc. to the lighting columns may be in the form of magnets. Further on, the means of fixating the grip device, the controllable robot etc, to the lighting column may also, at least in part, be in the form of one or more flanges projecting from the lighting column with which interacting means on the grip device, controllable robot etc. can interact and connect. In addition, the means of the grip device, controllable robot etc. to grip to the lighting column may be in the form of two or more gripping surfaces which are configured to move in a way relative each other so that the lighting column is held by at least one projecting spacer arm from the grip device, controllable robot etc, wherein one or more of the gripping surfaces may be coated with an elastic coating, or a coating which increases friction. In addition, the means of fixating the grip device, controllable robot etc. to the lighting column may be in the form of recesses on the lighting column, and interacting means on the grip device, controllable robot, etc. comprising corresponding projections, which may be used to fixate the grip device, controllable robot, etc. to the lighting column.

The street light luminaire is connected to the lighting column in a manner that allows for quick and easy installation and removal of street light luminaires. This also applies for the electrical connection between the street light luminaire and the lighting column. The means of interconnection between the street light luminaire and the lighting column may be of many different types, such as snaps, fasteners, knife switches, bayonet coupling, etc., but also other methods to interconnect the lighting column and street light luminaires are possible, and the present invention should not be considered limited to the above stated methods.

This means that the operation to mount or dismount the street light luminaire on the lighting column takes minimal time, which is a great advantage and radically reduces the risks associated with the work.

In addition, the controllable robot may comprise a device adapted to remove existing street light luminaires from the lighting column by cutting the lighting column and a device for mounting a new coupling device in the form of a second coupling device for the lighting column. The device adapted for removing existing street light luminaire from the lighting column may be in the form of at least one of: a circular saw, a band saw, a grinder, a pipe cutter or similar. In this configuration the controllable robot may additionally comprise a grip device adapted for mounting a second coupling device on the cut lighting column. A device adapted for mounting a second coupling device comprises a second grip device which has grasped one street light luminaire in which a second coupling device is coupled to the first coupling device of the street light luminaire. Thus, in this configuration, the controllable robot may comprise a grip device adapted to carry a street light luminaire including a first coupling device, which in turn is connected with a second coupling device, preferably using the two sockets of the first coupling device and the second coupling device, wherein the second coupling device can replace the sawn off street light luminaire without the arm being lowered, i.e. in the same position.

Also other systems of street light luminaires, not necessarily comprising a first and a second coupling devices, may be mounted on the sawn off street light luminaire. Depending on the existing system of street light luminaire another process, other than cutting the lighting column, may be considered for the removal of existing street light luminaires. Other possible methods of removing existing street light luminaires from the lighting column may be twisting or pulling of the existing street light luminaire.

The device may also comprise a device for feeding in cable into the lighting column. This can be done by means of at least one rotating roll or by blowing the cable by means of at least one compressor. In this configuration the device may also comprise a device to carry the cable. The method of how to replace the cable installation similar to that used in the present invention is considered to be part of the general knowledge

The device may be controlled remotely by wireless communication, such as through e.g. the use of electromagnetic waves.

### BRIEF DESCRIPTION OF THE DRAWINGS

Examples of the present invention will now be described in detail with reference to the drawings:
- Figure 1: shows a first example of how the transport unit is positioned at a lighting column
- Figure 2: shows in more detail parts of the an arm, a controllable robot, robot arms and grip devices being positioned at a lighting column
- Figure 3: shows the first phase of the replacement of existing street light luminaires with new system with modular street light luminaires as according to the invention
- Figure 4: shows the second phase of the replacement of existing street light luminaires with new system with modular street light luminaires as according to the invention

### DESCRIPTION OF CONFIGURATIONS

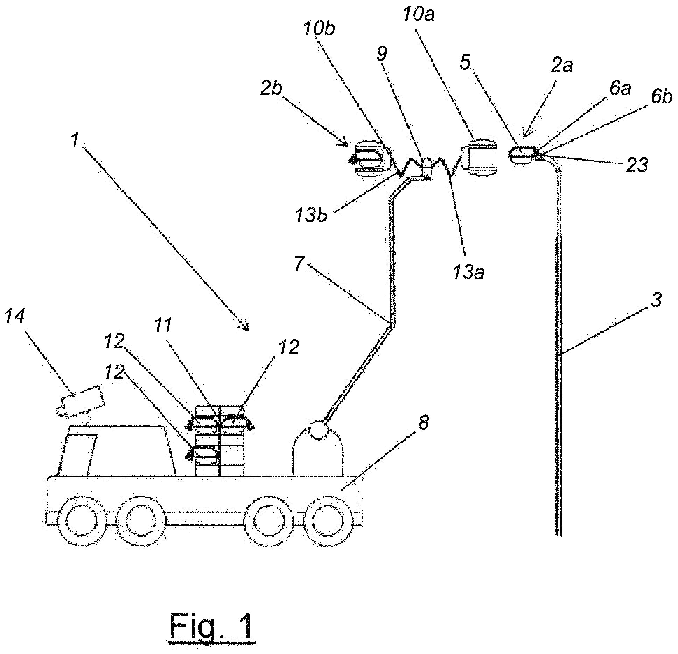

Figure 1 shows a device 1 for the replacement of a first modular street light luminaire 2a fixed to a lighting column 3. The first modular street light luminaire 2a comprises a light source and a housing 5. The housing 5 comprises a first coupling device 6a and the lighting column 3 has an end 23 where a second coupling 6b is mounted for attachment of the first street light luminaire 2a using the first coupling device 6a. The device 1 for the replacement of the first modular street light luminaire 2a comprises an arm 7 which is mounted on a transport unit 8. Figure 1 shows that at least one controllable robot 9 is arranged on the arm 7. The controllable robot 9 comprises at least a first grip device 10a adapted to remove and/or replace the street light luminaires 2a, 2b, 12. In Figure 1, the first and a second grip device 10a, 10b are in the form of claws, but other techniques or methods of grip devices that grasp the street light luminaires are also conceivable and the invention should not be considered to be limited by this configuration. The grip devices may comprise means that engage with a corresponding means in the street light luminaire, e.g. screw bolt connections, bayonet coupling, sliding joints, etc. In addition, the controllable robot 9 is configured to be operated by remote control from the transport unit 8 and/or from a distance and/or by using a pre-programmed process.

Figure 1 shows an example of the invention where the transport unit 8 is equipped with the arm 7 coupled to the controllable robot 9 comprising a first robot arm 13a and a second robot arm 13b. The first robot arm 13a is coupled to the first grip device 10a and the second robot arm 13b is coupled to the second grip device 10b.

At some point during the process, the second grip device 10b is positioned in a first position at a battery rack 11 for storing the street light luminaires 12. In Figure 1, a battery rack 11 is arranged on the transport unit 8. This is not part of the invention as defined in claim 1. According to the invention, the battery rack is arranged on the arm 7 or on the controllable robot, wherein the controllable robot can retrieve new street light luminaires and deposit old ones as the arm has raised the controllable robot to the level of the street light luminaire (not shown). Figure 1 shows a possible configuration of the battery rack 11 consisting of the three lighting fixtures 12, but several other designs of battery rack capable of storing different numbers of street light luminaires to be replaced and/or which have been replaced are possible (not shown).

In the example of figure 1 the second grip device 10b has been in the first position at the battery rack 11 and has grasped the second street light luminaire 2b from the battery rack 11. The arm 7 has then been guided by a movement to a second position at the lighting column 3, wherein the first grip device 10a can perform an operation that removes the first street light luminaire 2a which is arranged on the lighting column 3. The controllable robot 9 is then controlled to perform a movement which means that the second grip device 10b takes the first grip device's 10a place, wherein the second grip device 10b with the second street light luminaire 2b is moved to perform an operation that replaces the first street light luminaire 2a with the second street light luminaire 2b. The arm 7 is then guided by a movement to the first position, wherein the first grip device 10a, with the first street light luminaire 2a, is moved to deposit the first street light luminaire 2a in the battery rack 11.

This means that a controllable robot 9, comprising at least two grip devices 10a, 10b, one of which is loaded with the new second street light luminaire 2b for replacement, can remove the existing first street light luminaire 2a and install the new second street light luminaire 2b when the arm 7 is in a position at the first street light luminaire 2a.

The same operation can also be performed by a device including more than two grip devices, which means that more than one street light luminaire can be carried from the battery rack in a first stage and/or at least two street light luminaires can be replaced (not shown). This configuration allows further saving of time.

The same operation can also be performed by a device comprising one grip device, which in this case means that the arm must be lowered down between the step where the existing street light luminaire is removed and the step when the new street light luminaire, preferably taken from the battery rack, is arranged (not shown). In this configuration the time saving is not as great as in the configurations mentioned above.

Figure 1 shows that the device 1, configured to perform the replacement operation of street light luminaires or to replace street light luminaires, is arranged on the transport unit 8. The transport unit 8 may comprise one or more units on which the arm 7 is arranged and which can move the arm 7 in a plane parallel to the ground, and possibly also in a direction which coincides with the normal plane, i.e. vertically. The transport unit 8 is moved either by an own propulsion system or by the transport unit 8 being moved by means of a vehicle. The transport unit can for example be in the form of a trailer, be placed on a trailer or be something that a suitable vehicle can carry (not shown). The transport unit 8 may also be in the form of a vehicle, exemplified in Figure 1 by the transport unit 8 being a car.

As previously mentioned, Figure 1 shows that the device 1 comprises a battery rack 11 of street light luminaires 12 arranged in the battery rack 11, in which both street light luminaires 12 to be exchanged can be carried and replaced street light luminaires can be deposited. In Figure 1, the battery rack 11 is arranged on the transport unit 8. This is not part of the invention as defined in claim 1. According to the invention the battery rack 11 is arranged on arm 7 or the controllable robot.

In addition, the transport unit 8 in Figure 1 comprises a device for camera surveillance 14. In this configuration this allows the transport unit to be controlled remotely. The camera surveillance device may also be arranged in other ways, and the invention should not be considered to be limited by this configuration.

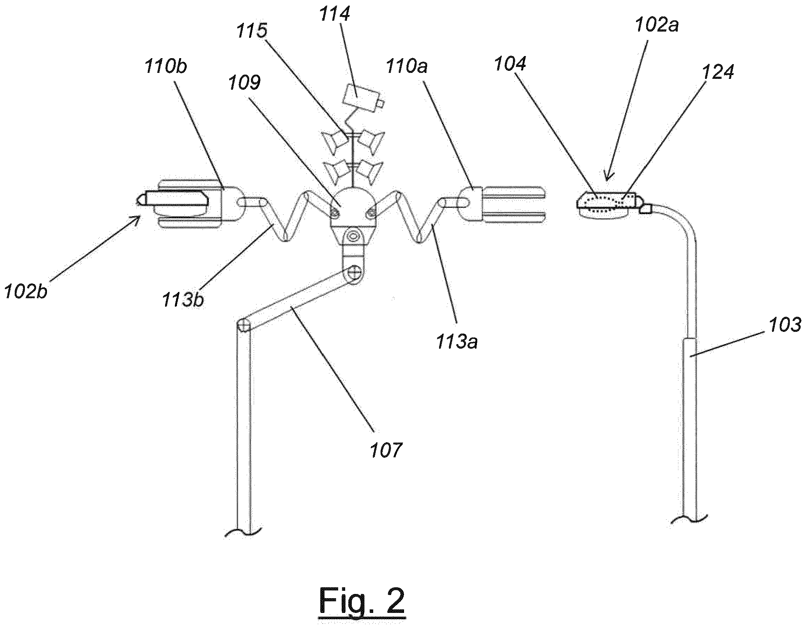

Figure 2 shows that a controllable robot 109 is arranged on an arm 107. The controllable robot 109 comprises at least a first grip device 110a which may be arranged to a first robot arm 113a, and Figure 2 shows that the controllable robot 109 comprises two robot arms 113a, 113b, each provided with a grip device 110a, 110b. In Figure 2, the grip devices 110a, 110b are in the form of claws, but other techniques or methods of grip devices 110a, 110b that grasp street light luminaires 102a, 102b are also conceivable and the invention should not be considered to be limited by this configuration. The controllable robot 109 is preferably arranged on the arm 107 so that it may rotate and/or move laterally and/or vertically and/or move in and out and/or may be turned or tilted. The robot arms 113a, 113b are preferably arranged on the controllable robot 109 so that they may move laterally and/or vertically and/or in and out and/or may be rotated and/or tilted. In addition, the grip device 110a, 110b may be arranged on the robot arm 113a, 113b so that it may move laterally and/or vertically and/or in and out and/or may be rotated or tilted. This implies that the controllable robot 109, the robot arm 113a, 113b and grip device 110a, 110b may be positioned according to the position of a lighting column 103 and the first street light luminaire 102a, where the controllable robot 109 will operate, based on the transport unit.

In addition, Figure 2 shows how the controllable robot 109 is provided with a lighting device 115. In the configuration shown in Figure 2 the lighting device 115 is arranged to the controllable robot 109, but at least one lighting device may also be arranged to the transport unit and/or the battery rack and/or the arm and/or the robot arm and/or the grip device (not shown). The lighting device 115 should not be seen as limited by how it is depicted in Figure 2. Figure 2 also shows a camera surveillance device 114. In the configuration shown in Figure 2 the camera surveillance device 114 is arranged to the controllable robot 109, but at least one camera surveillance device may also be arranged to the transport unit and/or the battery rack and/or the arm and/or the robot arm and/or grip device (not shown). The camera surveillance device 114 should not be seen as limited by how it is depicted in Figure 2.

Figure 2 further shows how the first street light luminaire 102a comprises a light source 104 and a first coupling device socket 124, shown in Figure 2 as dotted figures.

Figure 2 also shows that the second grip device 110b has grasped the second street light luminaire 102b and that the first grip device 110a is positioned to grasp and remove the first street light luminaire 102a on the lighting column 103.

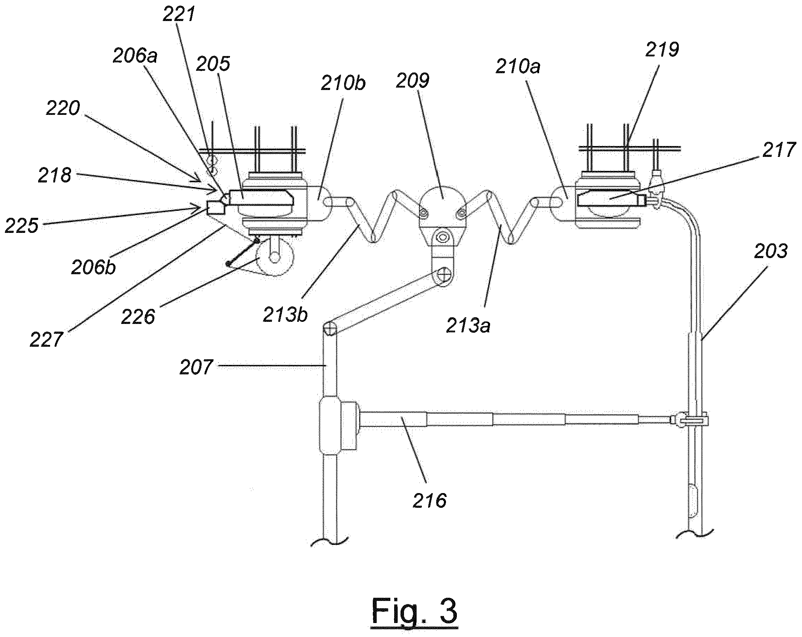

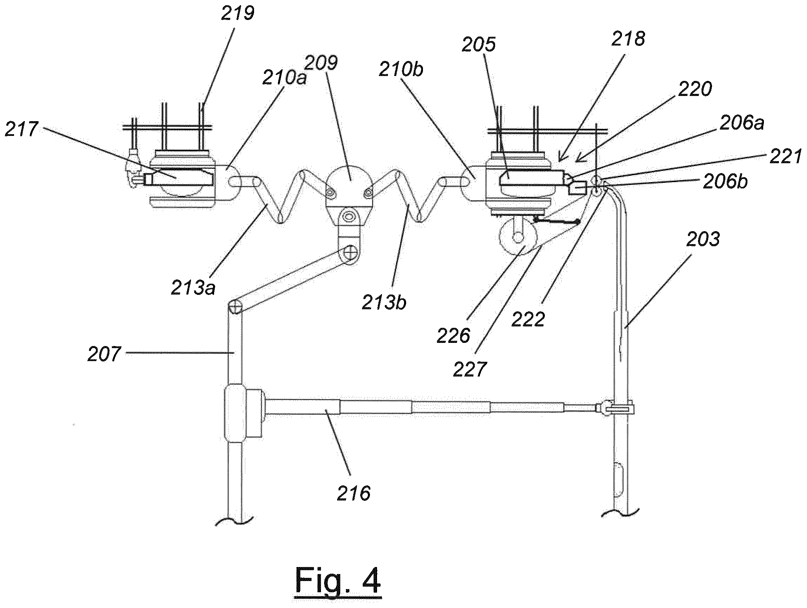

Figures 3 and 4 show an example of the invention for replacement of an existing street light luminaire 217 attached to a lighting column 203 for a modular street light luminaire system 225 in two different positions.

The modular street light luminaire system 225 comprises a light source, a housing 205 including a first coupling device 206a and a second coupling device 206b, connected to the first coupling device 206a. The lighting column 203 is provided with the existing street light luminaire 217, which is not compatible with the inventive street light luminaire that is part of the modular street light luminaire system 225, thus lacking the first coupling device 206a and the second coupling device 206b. The device for replacement of existing street light luminaires 217 for the inventive modular street light luminaire system 225 comprises at least one arm 207 which is mounted on a transport unit. Figures 3 and 4 show that at least one controllable robot 209 is attached to the arm 207. Grip devices 210a, 210b are both arranged to robot arms 213a, 213b which in turn are arranged to the controllable robot 209. In Figures 3 and 4 the grip devices 210a, 210b are in the form of claws, but other techniques or methods of the grip devices that grasp the street light luminaires are also conceivable and the invention should not be considered to be limited by this configuration.

Figures 3 and 4 also show a first grip device 210a comprising a device adapted to remove existing street light luminaire 219 by cutting the lighting column 203. The device adapted to remove existing street light luminaire 219 by cutting the lighting column 203 is arranged to the first grip device 210a in Figures 3 and 4. This configuration should not be considered to be limiting for the invention. The device adapted to remove existing street light luminaire may also be arranged to the controllable robot, the robot arm, the arm, directly to the transport unit, on a separate arm or similar, allowing the device to fulfil its purpose (not shown).

Figures 3 and 4 show a device for mounting or arranging of a second coupling device 220 comprising the second grip device 210b and the modular street light luminaire system 225. The modular street light luminaire system comprises a new street light luminaire 218 comprising the first coupling device 206a connected to the second coupling device 206b. Figures 3 and 4 also show a device for feeding in cable into the lighting column 221. The device for mounting or arranging of the second coupling device 220 and/or the device for feeding in cable into the lighting column 221 in Figures 3 and 4 are arranged on the second grip device 210b. This configuration should not be considered to be limiting for the invention. The device for mounting the second coupling device and/or the device for feeding in cable into the lighting column may also be arranged to the controllable robot, the robot arm, the arm, directly to the transport unit, on a separate arm or similar, allowing the device to fulfil its purpose (not shown).

Figures 3 and 4 also show the second grip device 210b comprising a device for transporting cable 226, which by means of the device for feeding in cable into the lighting column 221, can be fed into the lighting column 203 in connection with changing to a modular street light luminaire system 225. In Figures 3 and 4 the device for transporting cable 226 is arranged to a grip device 210b. This configuration should not be considered to be limiting for the invention. The device for transporting cable may also be arranged to the controllable robot, the robot arm, the arm, directly to the transport unit, to a separate arm or similar, allowing the device to fulfil its purpose (not shown).

Figures 3 and 4 also show that the arm 207 comprises means of fixating the grip device 216 to the lighting column 203. In the present configuration this means is in the form of a telescopic arm with gripping function, but the invention should not be limited by this configuration. In Figures 3 and 4, the means of fixating the grip device 216 to the lighting column 203 are arranged on the arm 207, but the means of fixating the grip device may also be arranged directly to the transport unit, the controllable robot, the robot arm, the grip device or in any another way which allows the means of fixating the grip device to fulfil its purpose (not shown). The means of fixating the grip device to the lighting column may also be in the form of an interacting means, such as in the form of a collar arranged to the lighting column and a matching device arranged to the grip device (not shown).

Common for all configurations or examples is that the grip device is fixed to the lighting column before any grip device, or any device arranged to the grip device, performs any operation. Thus, the means of fixating the grip device to the lighting column may be used both in the example shown in Figures 3 and 4 and in the example shown in Figure 1. This is done in order to fixate the grip device to the street light luminaire, in such a way that the street light luminaire is held in place, before any operation is executed.

Figures 3 and 4 show a configuration with two grip devices 210a, 210b, the first grip device 210a comprising the device adapted to remove existing street light luminaires 219 by cutting the lighting column 203 and the grip device 210b including means for mounting or arranging the second grip device 220 and the device for feeding in cable 221 into a cut lighting column 222. Figures 3 and 4 also show that the grip device 210b, comprising the means for mounting or arranging the second coupling device 220, also comprises the device for transporting cable 226. The invention should not be considered to be limited to the configuration shown in Figures 3 and 4, wherein the controllable robot 209 comprises two grip devices 210a, 210b. The invention may also work using at least one controllable robot with only one grip device comprising a device adapted to remove existing street light luminaire by cutting the lighting column, or with only one grip device comprising the means for mounting or arranging the second coupling device and a device for feeding in cable into the lighting column (not shown). In this configuration, however, the transport unit comprises at least two controllable robots, each preferably arranged to an arm, having a grip device including a device adapted to remove existing street light luminaire by cutting the lighting column and having a grip device comprising the means for mounting or arranging the second coupling device and a device for feeding in cable into the lighting column (not shown). The invention may also work with the controllable robot having two or more grip devices comprising the device adapted to remove existing street light luminaire by cutting the lighting column or with two or more grip devices comprising the means for mounting or arranging the second coupling device and the device for feeding in cable into the lighting column. This configuration also requires more than one controllable robot (not shown).

The arm 207, the controllable robot 209, the robot arm 213a the grip device 210a comprising the device adapted to remove existing street light luminaire 219 by cutting the lighting column 203 and the grip device 210b including the means for mounting the second grip device 220 and the device for feeding in cable into the lighting column 221 are arranged to be operated by remote control from the transport unit and/or at a distance and/or by using a pre-programmed process.

In all configurations of the invention where there is at least one second grip device 210b comprising the means for mounting the second grip device 220 and a device for feeding in cable into the lighting column 221, may also only one device for mounting the second coupling device, without a device for feeding in cable into the lighting column, be used (not shown). Feeding cable into the lighting column must be performed manually in this case (not shown).

Figures 3 and 4 show an example of replacement of the existing street light luminaire 217 attached to a lighting column 203 for a modular street light luminaire system 225. The same method as shown in Figures 3 and 4 can also be applied to mount other street light luminaire systems.

Figure 3 shows an example of where the arm 207 is provided with means of fixating the grip device to the lighting column 216, and where the lighting column 203 is fixed. In addition, the first grip device 210a is situated in a position at the existing street light luminaire 217 at the lighting column 203, wherein the existing street light luminaire 217 is grasped by the grip device 210a. Further on, the device adapted to remove existing street light luminaire 219 is in the process of cutting the lighting column 203. The second grip device 210b is in a position on the opposite side of the controllable robot 209 from the first grip device 210a.

Figure 4 shows an example of wherein the first grip device 210a and the second grip device 210b have changed positions, preferably by a rotating movement of the controllable robot 209, so that the second grip device 210b is in a position by the cut lighting column 222 and the first grip device 210a is in a position on the opposite side of the controllable robot 209. Further on, the device for feeding in cable 221 is positioned at the opening of the cut lighting column 222 and cable 227 is being fed in. The cable 227 is also arranged to the second coupling device 206b, which is coupled to the first coupling device 206a comprised in the new street light luminaire 218. When the appropriate amount of cable 227 is fed into the cut lighting column 222, the device for feeding in cable 221 is moved upwards so that, according to the example, the second grip device 210b may be moved towards the cut lighting column 222 while the second coupling device 206b may be arranged to the cut lighting column 222. Several different techniques for arranging the second coupling device 206b to the cut lighting column 222 are possible. The method for how the new, fed-in cable 227 replaces the existing cable and is connected to the electricity grid is considered to be general knowledge.

## Claims

1. A device (1) for the replacement of a first modular street light luminaire (2a, 102a; 2b, 102b) arranged to a lighting column (3, 103, 203) for a second modular street light luminaire (2b, 102b), wherein the street light luminaire (2a, 102a; 2b, 102b) comprises a light source (104) and a housing (5), wherein the housing (5) comprises a first coupling device (6a), and where one end of the lighting column (3, 103) has a second coupling device (6b) for attachment of the street light luminaire (2a, 102a; 2b, 102b) by connecting the first coupling device (6a) of the street light luminaire (2b, 102b) to the second coupling (6b) device of the lighting column (3, 103, 203), wherein the device (1) for replacing of the street light luminaire (2a, 102a; 2b, 102b) comprises an arm (7, 107, 207) which is mounted on a transport unit (8), wherein at least one controllable robot (9, 109, 209) is arranged on the arm (7, 107, 207), wherein the controllable robot (9, 109, 209) comprises at least a first grip device (10a, 110a, 210a), and wherein said at least first grip device (10a, 110a, 210a) is adapted to remove or replace street light luminaire (2a, 102a; 2b, 102b), and wherein said controllable robot (9, 109, 209) is configured to be operated by remote control, from a distance or by using a pre-programmed process, and wherein the device (1) comprises a battery rack (11) for street light luminaires, wherein the battery rack (11) is arranged on the arm (7, 107, 207) or on the controllable robot (9, 109, 209).

2. The device (1) according to claim 1, **characterised in that** the transport unit (8) is self-propelled or towed.

3. The device (1) according to any of the preceding claims, **characterised in that** the transport unit (8) comprises another battery rack of street light luminaires for exchange (12) wherein both street light luminaires for exchange (12) can be carried and replaced street light luminaires can be deposited.

4. The device (1) according to any of the preceding claims, **characterised in that** the arm (7, 107, 207) is articulated and controllable vertically, laterally, in and out or can rotate.

5. The device (1) according to any of the preceding claims, **characterised in that** the controllable robot (9, 109, 209) comprises a first robot arm (13a, 113a, 213a) for said at least first grip device (10a, 110a, 210a) which is controllable vertically, laterally, in and out, can rotate or can be tilted.

6. The device (1) according to any of the preceding claims, **characterised in that** the controllable robot (109) is provided with a camera surveillance device (114) and/or a lighting device (115).

7. The device according to any of the preceding claims, **characterised in that** the at least first grip device comprises means of guiding and positioning the at least first grip device to the street light luminaire (2a, 102a; 2b, 102b; 12).

8. The device according to one any of the preceding claims, **characterised in that** the transport unit, the controllable robot, the arm or the at least first grip device comprises means of guiding and positioning the at least first grip device to the lighting column.

9. The device according to any of the preceding claims, **characterised in that** the transport unit, the controllable robot, the arm (207), the robot arm or the at least first grip device comprise means of fixating the grip device (216) to the lighting column (203).

10. The device according to any of the preceding claims, **characterised in that** the mechanical and electrical connection between the lighting column and the street light luminaire (2a, 102a; 2b, 102b; 12) consists of a snap lock, of a screw arrangement, of a knife switch, of a bayonet cup or similar.

11. The device according to any of the preceding claims, **characterised in that** the controllable robot (209) comprises
- a device adapted to remove existing street light luminaire (219) from the lighting column (203) by cutting the lighting column (203), wherein the device adapted for removing existing street light luminaire (219) from the lighting column (203) may be in the form of at least one of: a circular saw, a band saw, a grinder, a pipe cutter or similar, and
- a device adapted for mounting the second coupling device (220) to the lighting column (203), wherein the device adapted for mounting a second coupling device (220) comprises a second grip device (210b) which has grasped one street light luminaire (218) in which a second coupling device (206b) is coupled to the first coupling device (206a) of the street light luminaire (218), wherein the second coupling device (206b) can replace the sawn off street light luminaire (217).

12. The device according to claim 11, **characterised in that** the controllable robot (209) comprises a device for feeding in cable (221) into a cut lighting column (222), wherein the device for feeding in cable (221) into the cut lighting column (222) or the second gripping device (210b) comprises a device for carrying the cable (226), and wherein the feeding of cable (227) into the lighting column is done by means of at least: a rotating roll or by blowing the cable by means of at least one compressor.

13. The device according to anyone of claims 1 - 10, **characterised in that** the controllable robot (9, 109, 209) comprises at least a second grip device (10b, 110b, 210b), and wherein said at least second grip device (10b, 110b, 210b) is adapted to remove or replace street light luminaire (2a, 102a; 2b, 102b).

## Patentansprüche

1. Vorrichtung (1) zum Austauschen einer an einem Lichtmast (3, 103, 203) angeordneten ersten modularen Straßenlaterne (2a, 102a; 2b, 102b) durch eine zweite modulare Straßenlaterne (2b, 102b), wobei die Straßenlaterne (2a, 102a; 2b, 102b) eine Lichtquelle (104) und ein Gehäuse (5) aufweist, wobei das Gehäuse (5) eine erste Kopplungseinrichtung (6a) aufweist, und ein Ende des Lichtmastes (3, 103) eine zweite Kopplungseinrichtung (6b) zur Befestigung der Straßenlaterne (2a, 102a; 2b, 102b) durch Verbinden der ersten Kopplungseinrichtung (6a) der Straßenlaterne (2b, 102b) mit der zweiten Kopplungseinrichtung (6b) des Lichtmastes (3, 103, 203) aufweist, wobei die Vorrichtung (1) zum Austauschen der Straßenlaterne (2a, 102a; 2b, 102b) einen Arm (7, 107, 207) aufweist, der auf einer Transporteinheit (8) montiert ist, wobei mindestens ein steuerbarer Roboter (9, 109, 209) am Arm (7, 107, 207) angeordnet ist, wobei der steuerbare Roboter (9, 109, 209) mindestens eine erste Greifeinrichtung (10a, 110a, 210a) aufweist, und wobei die erste Greifeinrichtung (10a, 110a, 210a) eingerichtet ist, die Straßenlaterne (2a, 102a; 2b, 102b) zu entfernen oder auszutauschen, und wobei der steuerbare Roboter (9, 109, 209) durch Fernsteuerung aus einem Abstand oder durch einen vorprogrammierten Prozess betätigt wird, und wobei die Vorrichtung (1) ein Batteriegestell (11) für Straßenlaternen aufweist, wobei das Batteriegestell (11) am Arm (7, 107, 207) oder am steuerbaren Roboter (9, 109, 209) angeordnet ist.

2. Vorrichtung (1) nach Anspruch 1, **dadurch gekennzeichnet, dass** die Transporteinheit (8) selbstfahrend ist oder gezogen wird.

3. Vorrichtung (1) nach einem der vorigen Ansprüche, **dadurch gekennzeichnet, dass** die Transporteinheit (8) ein weiteres Batteriegestell für Straßenlaternen zum Austausch (12) aufweist, in dem sowohl Straßenlaternen zum Austausch (12) transportiert als auch ausgetauschte Straßenlaternen gelagert werden können.

4. Vorrichtung (1) nach einem der vorigen Ansprüche, **dadurch gekennzeichnet, dass** der Arm (7, 107, 207) gelenkig ist, und senkrecht, seitlich, nach innen und nach außen gesteuert sowie gedreht werden kann.

5. Vorrichtung (1) nach einem der vorigen Ansprüche, **dadurch gekennzeichnet, dass** der steuerbare Roboter (9, 109, 209) einen ersten Roboterarm (13a, 113a, 213a) für die mindestens eine Greifeinrichtung (10a, 110a, 210a) aufweist, die senkrecht, seitlich, nach innen und nach außen gesteuert sowie gedreht oder geneigt werden kann.

6. Vorrichtung (1) nach einem der vorigen Ansprüche, **dadurch gekennzeichnet, dass** der steuerbare Roboter (109) mit einer Kamera-Überwachungseinrichtung (114) und/oder einer Beleuchtungseinrichtung (115) ausgerüstet ist.

7. Vorrichtung (1) nach einem der vorigen Ansprüche, **dadurch gekennzeichnet, dass** die mindestens eine Greifeinrichtung Mittel zur Führung und Positionierung der mindestens einen Greifeinrichtung zur bzw. an der Straßenlaterne (2a, 102a; 2b, 102b; 12) aufweist.

8. Vorrichtung (1) nach einem der vorigen Ansprüche, **dadurch gekennzeichnet, dass** die Transporteinheit, der steuerbare Roboter, der Arm oder die mindestens eine Greifeinrichtung Mittel zur Führung und Positionierung der mindestens einen Greifeinrichtung zum bzw. am Lichtmast aufweisen.

9. Vorrichtung (1) nach einem der vorigen Ansprüche, **dadurch gekennzeichnet, dass** die Transporteinheit, der steuerbare Roboter, der Arm (207), der Roboterarm oder die mindestens eine Greifeinrichtung Mittel zum Fixieren der Greifeinrichtung (216) am Lichtmast (203) aufweisen.

10. Vorrichtung (1) nach einem der vorigen Ansprüche, **dadurch gekennzeichnet, dass** die mechanische und elektrische Verbindung zwischen dem Lichtmast und der Straßenlaterne (2a, 102a; 2b, 102b; 12) aus einem Schnappverschluss, einer Schraubanordnung, einem Messerschalter, einem Bajonettverschluss oder dgl. besteht.

11. Vorrichtung (1) nach einem der vorigen Ansprüche, **dadurch gekennzeichnet, dass** der steuerbare Roboter (209) aufweist
- eine Einrichtung, die zum Entfernen einer vorhandenen Straßenlaterne (219) vom Lichtmast (203) mittels Durchschneiden des Lichtmastes (203) eingerichtet ist, wobei die Einrichtung, die zum Entfernen einer vorhandenen Straßenlaterne (219) vom Lichtmast (203) eingerichtet ist, mindestens entweder eine Kreissäge, eine Bandsäge, ein Rohrschneider oder dgl. sein kann, und
- eine Einrichtung, die zum Installieren der zweiten Kopplungseinrichtung (220) am Lichtmast (203) eingerichtet ist, wobei die Einrichtung, die die zum Installieren einer zweiten Kopplungseinrichtung (220) eingerichtet ist, eine zweite Greifeinrichtung (210b) aufweist, die eine Straßenlaterne (218) gegriffen hat, in der eine zweite Kopplungseinrichtung (206b) mit der ersten Kopplungseinrichtung (206a) der Straßenlaterne (218) gekoppelt ist, wobei die zweite Kopplungseinrichtung (206b) mit der ersten Kopplungseinrichtung (206a) der Straßenlaterne (218) gekoppelt wird, wobei die zweite Kopplungseinrichtung (206b) die abgesägte Straßenlaterne (217) austauschen kann.

12. Vorrichtung (1) nach einem der vorigen Ansprüche, **dadurch gekennzeichnet, dass** der steuerbare Roboter (209) eine Einrichtung zum Einführen eines Kabels (221) in einen durchgeschnittenen Lichtmast (222) aufweist, oder dass die zweite Greifeinrichtung (210b) eine Einrichtung zum Tragen des Kabels (226) aufweist, und wobei das Einführen des Kabels (227) in den Lichtmast mittel mindestens entweder mittels einer rotierenden Rolle oder durch Blasen des Kabels mittels mindestens eines Kompressors erfolgt.

13. Vorrichtung (1) nach einem der vorigen Ansprüche, **dadurch gekennzeichnet, dass** der steuerbare Roboter (9, 109, 209) mindestens eine zweite Greifeinrichtung (10b, 110b, 210b) aufweist, und wobei die mindestens zweite Greifeinrichtung (10b, 110b, 210b) zum Entfernen oder Austauschen der Straßenlaterne (2a, 102a; 2b, 102b) eingerichtet ist.

## Revendications

1. Dispositif (1) pour le remplacement d'un premier luminaire d'éclairage public modulaire (2a, 102a; 2b, 102b) monté sur une colonne d'éclairage (3, 103, 203) pour un deuxième luminaire d'éclairage public modulaire (2b, 102b), dans lequel le luminaire d'éclairage public (2a, 102a; 2b, 102b) comprend une source lumineuse (104) et un boîtier (5), dans lequel le boîtier (5) comprend un premier dispositif de couplage (6a), et dans lequel une extrémité de la colonne d'éclairage (3, 103) comporte un deuxième dispositif de couplage (6b) pour la fixation du luminaire d'éclairage public (2a, 102a; 2b, 102b) en connectant le premier dispositif de couplage (6a) du luminaire d'éclairage public (2b, 102b) au deuxième dispositif de couplage (6b) de la colonne d'éclairage (3, 103, 203), dans lequel le dispositif (1) destiné au remplacement du luminaire d'éclairage public (2a, 102a; 2b, 102b) comprend un bras (7, 107, 207) qui est monté sur une unité de transport (8), dans lequel au moins un robot pouvant être commandé (9, 109, 209) est monté sur le bras (7, 107, 207), dans lequel le robot pouvant être commandé (9, 109, 209) comprend au moins un premier dispositif de saisie (10a, 110a, 210a), et dans lequel ledit au moins un premier dispositif de saisie (10a, 110a, 210a) est apte à retirer ou remplacer le luminaire d'éclairage public (2a, 102a; 2b, 102b), et dans lequel ledit robot pouvant être commandé (9, 109, 209) est configuré pour être mis en fonctionnement par commande à distance, depuis une certaine distance ou en utilisant un processus préprogrammé, et dans lequel le dispositif (1) comprend un support de batterie (11) pour luminaires d'éclairage public, dans lequel le support de batterie (11) est monté sur le bras (7, 107, 207) ou sur le robot pouvant être commandé (9, 109, 209).

2. Dispositif (1) selon la revendication 1, **caractérisé en ce que** l'unité de transport (8) est autopropulsée ou remorquée.

3. Dispositif (1) selon l'une quelconque des revendications précédentes, **caractérisé en ce que** l'unité de transport (8) comprend un autre support de batterie de luminaires d'éclairage public permettant d'effectuer un échange (12), dans lequel les deux luminaires d'éclairage public permettant d'effectuer un échange (12) peuvent être transportés et les luminaires d'éclairage public remplacés peuvent être déposés.

4. Dispositif (1) selon l'une quelconque des revendications précédentes, **caractérisé en ce que** le bras (7, 107, 207) est articulé et peut être commandé verticalement, latéralement, rentré et sorti ou peut tourner.

5. Dispositif (1) selon l'une quelconque des revendications précédentes, **caractérisé en ce que** le robot pouvant être commandé (9, 109, 209) comprend un premier bras de robot (13a, 113a, 213a) pour ledit au moins un premier dispositif de saisie (10a, 110a, 210a) qui peut être commandé verticalement, latéralement, rentré et sorti, qui peut tourner ou qui peut être basculé.

6. Dispositif (1) selon l'une quelconque des revendications précédentes, **caractérisé en ce que** le robot pouvant être commandé (109) est muni d'un dispositif de surveillance à caméra (114) et/ou d'un dispositif d'éclairage (115).

7. Dispositif selon l'une quelconque des revendications précédentes, **caractérisé en ce que** l'au moins un premier dispositif de saisie comprend des moyens pour guider et positionner l'au moins un premier dispositif de saisie au luminaire d'éclairage public (2a, 102a; 2b, 102b ; 12).

8. Dispositif selon l'une quelconque des revendications précédentes, **caractérisé en ce que** l'unité de transport, le robot pouvant être commandé, le bras ou l'au moins un premier dispositif de saisie comprend des moyens pour guider et positionner l'au moins un premier dispositif de saisie à la colonne d'éclairage.

9. Dispositif selon l'une quelconque des revendications précédentes, **caractérisé en ce que** l'unité de transport, le robot pouvant être commandé, le bras (207), le bras de robot ou l'au moins un premier dispositif de saisie comprennent des moyens pour fixer le dispositif de saisie (216) à la colonne d'éclairage (203).

10. Dispositif selon l'une quelconque des revendications précédentes, **caractérisé en ce que** la connexion mécanique et électrique entre la colonne d'éclairage et le luminaire d'éclairage public (2a, 102a; 2b, 102b ; 12) consiste en un fermoir à loquet, en un système à vis, en un commutateur à lames, en une coupelle à baïonnette ou autres.

11. Dispositif selon l'une quelconque des revendications précédentes, **caractérisé en ce que** le robot pouvant être commandé (209) comprend
- un dispositif apte à retirer un luminaire d'éclairage public existant (219) de la colonne d'éclairage (203) par découpage de la colonne d'éclairage (203), dans lequel le dispositif apte à retirer un luminaire d'éclairage public existant (219) de la colonne d'éclairage (203) peut être sous la forme d'au moins l'un des dispositifs suivants: une scie circulaire, une scie à ruban, une meule, un coupe-tube ou autres, et
- un dispositif apte à monter le deuxième dispositif de couplage (220) sur la colonne d'éclairage (203), dans lequel le dispositif apte à monter un deuxième dispositif de couplage (220) comprend un deuxième dispositif de saisie (210b) qui comporte un luminaire d'éclairage public saisi (218) dans lequel un deuxième dispositif de couplage (206b) est couplé au premier dispositif de couplage (206a) du luminaire d'éclairage public (218), dans lequel le deuxième dispositif de couplage (206b) peut remplacer le luminaire d'éclairage public scié (217).

12. Dispositif selon la revendication 11, **caractérisé en ce que** le robot pouvant être commandé (209) comprend un dispositif pour introduire un câble (221) dans une colonne d'éclairage découpée (222), dans lequel le dispositif pour introduire un câble (221) dans la colonne d'éclairage découpée (222) ou le deuxième dispositif de saisie (210b) comprend un dispositif destiné à transporter le câble (226), et dans lequel l'introduction du câble (227) dans la colonne d'éclairage est effectuée au moyen d'au moins: un cylindre tournant ou en soufflant le câble au moyen d'au moins un compresseur.

13. Dispositif selon l'une quelconque des revendications 1 - 10, **caractérisé en ce que** le robot pouvant être commandé (9, 109, 209) comprend au moins un deuxième dispositif de saisie (10b, 110b, 210b), et dans lequel ledit au moins un deuxième dispositif de saisie (10b, 110b, 210b) est apte à retirer ou remplacer le luminaire d'éclairage public (2a, 102a; 2b, 102b).
